# EUROPEAN PATENT APPLICATION

(11) **EP 4 422 037 A1**
(43) Date of publication of application: **28.08.2024**
(21) Application number: 23382161.0
(22) Date of filing: 22.02.2023
(51) Int. Cl.: H02K 3/14, H02K 3/40, H02K 7/18

(54) **STATOR WINDING ARRANGEMENT FOR A WIND TURBINE GENERATOR, WIND TURBINE GENERATOR, WIND TURBINE AND METHOD FOR MANUFACTURING A STATOR WINDING ARRANGEMENT**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

Stator winding arrangement (1) for a wind turbine generator (25), comprising at least one electrical conductor (3) forming turns of at least one coil and an interturn insulation (7) extending around the conductor (3), the coil running in a geometrical shape having at least one bend (6, 14), wherein the smallest bending radius of each bend (6, 14) is in the range from 25 to 35 mm and the interturn insulation (7) at least at the at least one bend (6, 14) comprises at least one layer (11, 12, 13) of a mica insulation tape (8) wrapped around the conductor (3).

## Description

The invention concerns a stator winding arrangement for a generator of a wind turbine, comprising at least one electrical conductor forming turns of at least one coil and an interturn insulation extending around the conductor, wherein the coil runs in a geometrical shape having at least one bend. The invention further concerns a wind turbine generator, a wind turbine and a method for manufacturing a stator winding.

In wind turbines, large, massive generators are used to convert mechanical energy from the wind into electrical energy, which may, for example, be fed into a power grid and/or be used to operate one or more devices of the wind turbine. The wind turbine generator usually comprises a rotor, which is coupled to a rotor hub to which multiple wind turbine blades are attached. Wind impinging on the plates causes the rotor to rotate relative to a stator of the wind turbine. The stator comprises stator windings, into which electrical currents are induced by a magnet of the rotor. Power electronics, for example a converter and the like, are provided to convert the electrical energy produced in the stator windings to be further usable, for example feedable into a power grid. The rotor may be an inner rotor (having the outer stator surrounding it) or, a preferred variant in direct-drive wind turbines, an outer rotor rotating around an inner stator.

Regarding the stators of wind turbine generators, it has been proposed to compose the stator of multiple stator segments, wherein each stator segment may have separate stator windings. The stator windings may form coils, in particular at least one coil for each phase. In most cases, three-phase generators are employed. Coils may be connected in serial and/or in parallel. Here, the conductors of the stator windings usually run around stator teeth in multiple turn to form a coil, such that the course of the conductor forms a certain geometrical shape. This geometrical shape is governed by space restrictions and functional restrictions. Such restrictions may be particularly narrow in single-layer windings.

The geometry restrictions in the state of the art led to the use of insulation materials ensuring a good mechanical performance. Here, it is distinguished between interturn insulation enclosing the conductor directly and insulating against adjacent conductor sections of other turns of the coil and coil insulation ("mainwall insulation") around the group of conductor sections of all turns forming the coil. The traditional insulation material used for the interturn insulation of conductors of coils are polyimide materials, for example commonly commercially known as "Kapton". Polyimide materials have good mechanical properties preventing the occurence of cracks in the interturn insulation during bending and/or looping steps in manufacture and/or when undergoing stresses while in use. However, the thermal properties as well as the dielectric strength of polyimide materials may be acceptable, but not remarkable.

Polyimide materials provide a good option for simplifying manufacture of stator winding arrangements for wind turbine generators, as accurate control of the coil manufacturing is not required. The mechanical strength against undesirable cracks allows an easy handling of the stator windings and coils, in particular allowing the use of a wide range of handling operations and tools.

Modern wind turbines provide increasing amounts of electrical power. This power increase directly translates to the wind turbine generators, which have to be designed for the resulting operation conditions. In particular, higher temperatures, higher voltages and higher currents may occur in such highpower applications. Hence, also the electrical and thermal performance of insulations have to be improved.

It is hence an object of the current invention to provide an improved interturn insulation in stator windings regarding electrical and thermal performance while still being able to handle geometrical restrictions and mechanical loads occurring during manufacture and use.

This object is achieved by providing a stator winding arrangement, a wind turbine generator, a wind turbine and a method for manufacturing a stator winding according to the independent claims. Advantageous embodiments are described by the dependent claims.

In a stator winding as initially described, according to the invention, the smallest bending radius of each bend is in the range from 25 to 35 mm and the interturn insulation at least at the at least one bend comprises at least one layer of a mica insulation tape wrapped around the conductor.

It is an inside of the current invention that two factors are relevant for providing an improved interturn insulation in stator windings in a wind turbine, namely insulation material and winding geometry regarding the bends of the conductor. These factors are linked and should work together to provide the improved solution. According to the invention, it was surprisingly found that, despite mechanical performance constraints, mica-based materials can be used even in especially restricted environments requiring certain geometries, as long as the radii of the bends are in an interval from 25 to 35 mm. This combination of material and geometry leads to a reduction of failure risks, in particular by mechanical damages, for example during the coil looping operation and/or bending operation as well as in the final turn. As all insulation materials used in this invention are mica-based and hence compatible, the solution will increase electrical insulation as well as thermal performance.

Moreover, the current invention allows improved serial manufacturing, allowing a high repeatability in terms of quality and correct dimensions of the coils. Advantageously, mica-based materials are also available at a reduced cost compared to polyimide materials.

In concrete, advantageous embodiments, the mica insulation tape may comprise a mica sublayer backed by a thinner PET sublayer at one side. Such mica insulation tapes have already been proposed in the art and comprise a so-called PET backer for providing strength to the tape and improving the handling. Furthermore, a pure PET layer may be used at basis directly on the conductor.

From an electrical point of view, the interturn insulation has to be strong enough, in particular thick enough, to provide enough dielectric strength to withstand voltage differences occurring between different turns of the coil. Hence, more than one layer of the mica insulation tape may be necessary. Generally speaking, the mica insulation tape may have a thickness of 0.1 to 0.5 mm. Depending on the concrete configuration and characteristic parameters of the wind turbine generator, generally speaking, two to four layers of mica insulation tape have been found to provide the necessary dielectric strength and greatly improve the insulation condition as well as the thermal behavior compared to known solutions.

Usually, to manufacture the coil, the already insulated conductor is bent to form the respective turns (loops) of the coil. This process may also be called "coil looping". Deep analysis has shown that the friction between turns and also between different layers is a highly relevant stress phenomenon that may cause the appearance of cracks and wrinkles in the interturn insulation.

Hence, in preferred embodiments, the insulation may comprise an inner pure PET tape and multiple, in particular two to four, layers of the mica insulation tape, wherein the different layers are stacked such that each mica sublayer is positioned between PET material. Hence, for example, a pure PET tape comprising no mica may be applied directly onto the conductor, for example a copper strand, to be used as a basis. Onto the pure PET tape, the first layer of PET-mica tape is added such that the mica sublayer contacts the pure PET tape. The PET sublayer delimits the layer on the outer side, such that the mica sublayer is place between PET material. Here, a second layer of PET-backed mica insulation tape is added in the same configuration as the first layer, such that the outer PET sublayer of the first layer and the inner mica sublayer of the second layer abut at the boundary. All further layers use this configuration, such that each mica sublayer is placed between PET sublayers. In such a configuration, the friction properties of every pair of layers will be identical and the appearance of wrinkles and cracks during bending operations, in particular looping operations, will be reduced. Regarding abutting interturn insulations, as the outermost sublayer material is always PET for each turn of the coil, that is, each conductor section forming a turn, mechanical protection of the interturn insulation is improved. Further, the same materials meet, such that the individual interturn insulations have a similar roughness, facilitating displacement during bending, for example coil looping. In particular, due to the same materials at possibly relatively moving interturn insulation boundaries, a condition comparable to material continuity is achieved, reducing the risk of mechanical damages during manufacture of the stator winding arrangement and also later on, during its use, when the coil may be, for example, subject to vibrations and/or other movement occurring during operation of the wind turbine generator.

In this context, if the interturn insulation comprises multiple, in particular two to four, layers of the mica insulation tape, wherein, along the conductor, the boundaries between different adjacent sections of mica insulation tape in the layers are staggered. In particular, the mica insulation tape may be wrapped around the conductor having a certain width, leading to multiple adjacent sections of mica insulation tape along the conductor. If the boundaries are staggered in the stacking direction of the layers, additional mechanical stability and robustness regarding cracks and wrinkles is provided.

In embodiments, the geometrical shape may be a longitudinal shape comprising two longitudinally straight sections, wherein at least one first of the at least one bend connects the straight sections at at least one longitudinal end. For example, the geometrical shape may be at least essentially a racetrack shape and/or at least one first bend may comprise a bending angle of the conductor of at least essentially 180°. In the wind turbine generator, the stator winding arrangement and hence the coils may be placed with their straight sections in recesses of the stator, in particular extending along stator teeth. In a coil overhang region, the straight sections may be connected by a 180° first bend. Alternatives comprise using multiple first bends having straight sections in-between, for example two 90° first bends having an additional straight section perpendicular to the parallel longitudinal straight sections. In particular in this context, the choice of mica insulation tape and the radius in the interval of 25 to 35 mm still allow provision of the first bends, even in tight and narrow environments, while providing improvements regarding interturn insulation properties and thermal properties. In particular, bends of 180° are allowed without mechanical damage if the bending radius is at least 25 mm.

If more than one phase is used in the stator, often, coils of the respective phases in the same tooth structure are placed overlappingly in the sense that the straight sections of each phase follow each other in an interleaved manner in the direction perpendicular to the extension of the straight sections. In such embodiments, but also regarding other geometrical restrictions, second bends of the more than one bend may be provided, which bend the longitudinal ends out of a plane in which the straight sections extend, in particular in a predetermined bending angle. Such second bends may, for example, be used to have the conductor in its multiple turns pass the conductor of the coil of another phase. If, for example, in the stator winding arrangement of a first phase, the first bends are in-plane, the longitudinal ends of the coil of a second phase may be bent out of the plane in which the interleaving straight sections extend using respective second bends, such that the longitudinal ends of the coil of the second phase are positioned above or below the longitudinal ends of the coil of the first phase. Generally speaking, if first and second bends are used, the bending radius requirement, in particular the smallest bending radius being at least 25 mm, applies to both the first and second bends and, preferably, the first and second bends are provided at a distance to each other, i.e. not combined. For example, at the end of the straight sections, the second bends may be provided, bending the longitudinal end of the coil out of the plane in which the straight sections extend, in particular into a tilted plane, where, for each longitudinal end, the at least one first bend is provided.

Preferably, the conductor may comprise copper and/or be a strand, in particular be a copper strand. The conductor may have an at least essentially rectangular or circular cross-sectional shape. The conductor sections forming respective turns and thus running parallel may be arranged in any desired layout, for example in an array- or matrix-like arrangement of turns of the coil. The arrangement of turns forming the coil may be further stabilized, held and insulated by a coil insulation, which may also be called mainwall insulation, which encloses all the turns of the conductor in a common insulation structure, which, of course, has to be distinguished from the interturn insulation addressed in this invention insulating between conductor sections of different turns.

The invention further concerns a wind turbine generator, comprising a stator and a rotor, the stator having multiple stator winding arrangements according to the invention. All features and remarks regarding the stator winding arrangement can analogously be applied to the wind turbine generator according to the invention, such that the same advantages can be achieved.

In particular, the coils of the stator winding arrangements may each comprise straight sections running parallelly in recesses of the stator and first bends connecting the straight sections in a coil overhang region. Between adjacent straight sections, stator teeth of a stator teeth structure may extend. In particular, the coil overhang regions may comprise the longitudinal ends already mentioned above.

In preferred embodiments, multiple stator winding arrangements at one of multiple tooth structures may be provided for different phases, whose straight sections run parallelly, in particular in an interleaved manner, wherein at least one of the stator winding arrangements of each tooth structure is bent, forming a second bend, at a bending angle out of the plane, in which the straight sections run, in the coil overhang region to pass a stator winding arrangement of another phase. As already discussed above, if the straight sections of the respective coils associated with different phases are arranged in an interleaved fashion in set of stator winding arrangements of a set associated with a tooth structure, the geometrical shape of the coil of one of the phases may completely extend in the plane in which the straight sections extend, while for the coil of at least one other phase, the geometrical shape may be bent out of this plane in the coil overhang region to allow the conductor to pass by the conductor of the coil of the one phase. For example, to each phase, predetermined bending angles may be assigned to allow the coil conductors to pass each other in the coil overhang region even if the amount of space is restricted.

Generally speaking, in particular if the wind turbine generator is used in a direct-drive wind turbine, the stator may be an inner stator and surrounded by the outer rotor. However, in other embodiments, the stator may also be an outer stator enclosing the inner rotor. The rotor comprises at least one magnet, in particular permanent magnet, to define corresponding rotor poles.

In a wind turbine according to the invention, a wind turbine generator according to the invention is provided. Such a wind turbine may, for example, be an off-shore wind turbine and/or a direct-drive wind turbine.

The invention also provides a method for manufacturing a stator winding arrangement for a wind turbine generator, comprising the steps of
- providing an electrical conductor,
- wrapping at least one layer of a mica insulation tape around the conductor as an interturn insulation, and
- bending the conductor into a coil having multiple turns and a geometrical shape with at least one bend, wherein the smallest bending radius of each bend is in the range from 25 to 35 mm.

Hence, the interturn insulation and the radii are chosen such that bending of the conductor, in particular coil looping, can be performed after adding the interturn insulation, without risking damages due to mechanical stress. The resulting stator winding arrangement, in particular the interturn insulation, also withstands mechanical stresses occurring during use. In an additional step, an outer coil insulation ("mainwall insulation") may be added, also stabilizing and protecting the turns of the coil.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a schematical perspective view of a stator winding arrangement according to the invention,
- Fig. 2: a cross-section of the embodiment of fig. 1,
- Fig. 3: an exemplary layer structure of the interturn Insulation,
- Fig. 4: a detail view of a second embodiment of a stator winding arrangement according to the invention at a longitudinal end,
- Fig. 5: a detail view of a third embodiment of a stator winding arrangement according to the invention at a longitudinal end,
- Fig. 6: a stator winding comprising multiple stator winding arrangements according to the invention,
- Fig. 7: a detailed view of a coil overhang region of the stator winding, and
- Fig. 8: a schematical cross-sectional view of a wind turbine according to the invention.

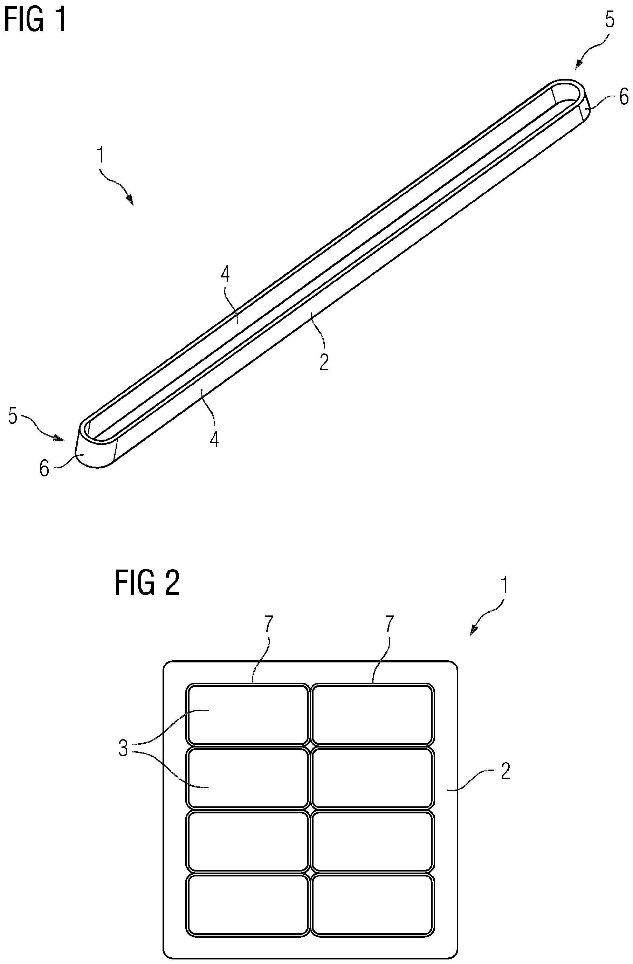

Fig. 1 shows a schematic perspective view of a stator winding arrangement 1 providing a coil for use in a tooth structure of a stator of a wind turbine generator. In fig. 1, the outer geometrical shape is illustrated; that is, only the outer coil insulation 2 (mainwall insulation) is shown. Fig. 2 shows a corresponding cross-sectional view, which is purely schematic and may not be to scale. From the cross-sectional view of fig. 2, it can be seen that a conductor 3, which has been bent to form multiple turns of the coil, is enclosed by the coil insulation 2. The conductor 3 is a copper strand and has, in this case, an at least essentially rectangular cross-section. The conductor sections of the multiple turns forming the coil are, in this case, arranged in a matrix-like manner which is purely exemplary, as is the number of turns (in this case eight). Other configurations already proposed in the art may alternatively be used. Regarding the coil insulation 2, implementations known from the art may also be employed, for example molded configurations and/or the usage of strong tapes.

In fig. 1, as the geometrical shape, an essentially racetrack-like shape is shown. The geometrical shape of the coil comprises two straight sections 4 running parallelly, which are connected at the longitudinal ends 5 by first bends 6, in this case having a constant bending radius and providing the full bending angle of 180°. In other conceivable configurations, at each longitudinal end 5, two first bends 6 with a bending angle of 90° connected by an additional straight section may be employed, and the like. The smallest bending radius of the first bends 6 is 25 to 35 mm, such that the stator winding arrangement 1 can be used in tight environments having strong geometrical restrictions and requirements. The interturn insulation 7, see fig. 2, is designed such that, despite these bending radii, no cracks and/or wrinkles occur during manufacturing of the stator winding arrangement 1, in particular during bending of the conductor 3 to form the turns and thus the coil (coil looping), or during use in the stator. In addition, improved thermal and insulation properties are provided compared to known solutions, which use polyimide materials. In the embodiments shown here, the interturn insulation 3 comprises at least one layer of mica insulation tape.

It should be noted that connections and contacts of the coil are not shown for simplicity.

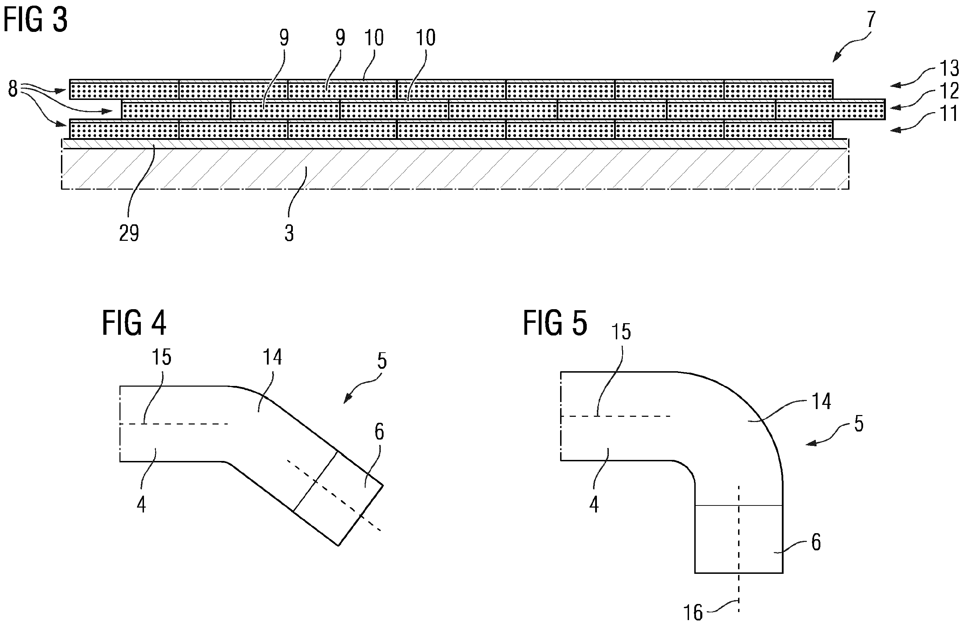

Fig. 3 shows a concrete example of a three-mica-layer interturn insulation 7 on the electrical conductor 3. A pure PET tape 29 is directly applied to the conductor 3 and forms the basis. As mica insulation tape 8, in this case, PET-mica tape is used. The mica insulation tape 8 comprises a mica sublayer 9 backed by a PET sublayer 10. It may, for example, have a thickness of 0.1 to 0.5 mm.

As can be seen, in the first mica layer 11, the mica sublayer 9 contacts the pure PET tape 29. The PET sublayer 10 is the outer layer and the mica sublayer 10 is protectedly placed between PET material 29, 10. In alls further layers 12, 13, again, the mica insulation tape 8 is wrapped around the conductor 3 in the same orientation, such that each mica sublayer 9 of the is contacting the PET sublayer 10 of the inner layer 11, 12. Hence, mica is always placed between PET and a PET sublayer 10 forms the outermost boundary. This reduces mechanical stress between the layers 11, 12, 13 and prevents damages during manufacture as well as during use. Further stability and robustness as well as resistance against mechanical stresses is provided by wrapping the mica insulation tape 8 of the different layers 11, 12, 13 in a staggered manner, for example the single strips being displaced by half of the width of the mica insulation tape 8, as shown in fig. 3.

As the layer structure of the interturn insulation 7 along the whole length is the same, between adjacent sections of the conductor 3 forming the turns also the same materials, here PET, contact, leading to the further resilience regarding mechanical stresses. The PET sublayer 10 forming the outer boundaries improves mechanical protection. Cracks and wrinkles are reduced.

When used in a generator, the straight sections 4 of fig. 1 are placed, for example, in recesses of the stator, in particular adjacent to stator teeth. The longitudinal ends 5 form the coil overhang sections. In the first embodiment of fig. 1, the first bends 6 of the longitudinal ends 5 extend in the same plane as the straight sections 4. However, due to certain requirements and geometrical restrictions, in particular if the straight sections 4 of different phases are interleavingly positioned in a tooth structure of a stator, modified embodiments comprising a second bend out of the plane of the straight sections 4 may be advantageous.

Fig. 4 shows a detail of the longitudinal end 5 of a modified second embodiment of a stator winding arrangement 1 according to the invention. In this embodiment, via second bends 14, the longitudinal end 5 is bent out of the schematically indicated plane 15 in which the straight sections 4 extend, such that the first bend 6 lies in a tilted plane 16. For both the first bends 6 and the second bends 14, the smallest bending radius is in the interval from 25 mm to 35 mm. Hence, the interturn insulation 7 can withstand respective mechanical stresses also regarding the second bends 14.

The third embodiment illustrated in a corresponding detail view in fig. 5 shows that the second bends 14 may also realize a bending angle of 90°, such that the tilted plane 16 is perpendicular to the plane 15.

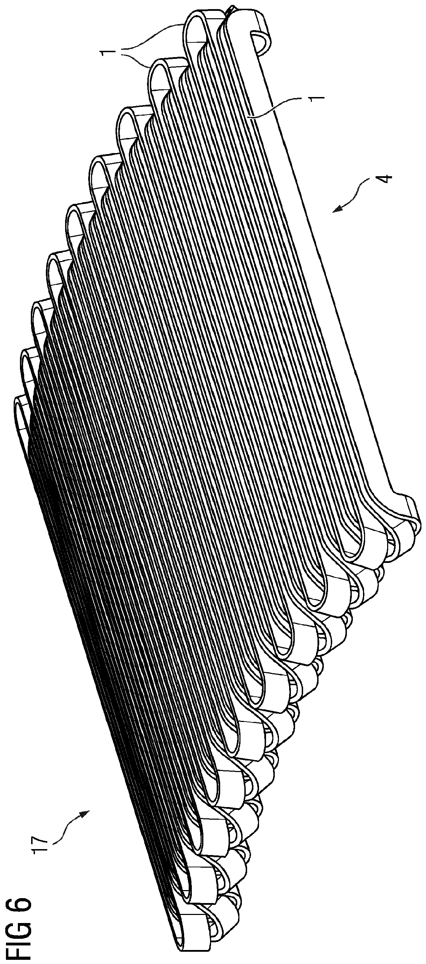

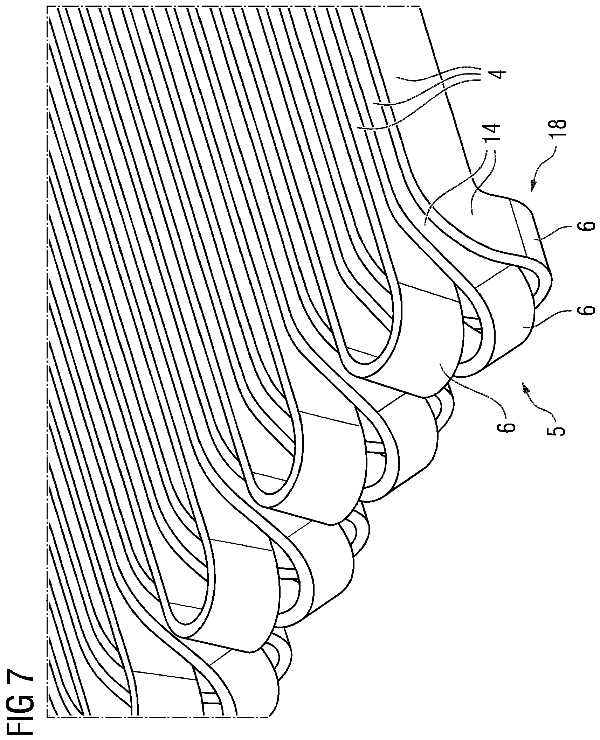

Bending the longitudinal ends 5 out of the plane 15, in which the straight sections 4 extend, allows, for example, to pass other coils/stator winding arrangements 1 having interleaved straight sections 4. Fig. 6 shows a stator winding 17 composed of multiple sets of stator winding arrangements 1, wherein each such set comprises three stator winding arrangements 1, one for each of three phases. Mounted to the stator, each set of three stator winding arrangements 1 can be associated with a tooth structure, wherein the straight sections 4 of the three coils of the set follow each other in interleaved fashion. In the detailed view of fig. 7, it can be seen that, in the coil overhang region 18, the bending angles of the second bends 14 of two of the three stator winding arrangements 1 of one set have been chosen such that the respective other stator winding arrangements 1 of the set can be passed to connect the straight sections 4 positioned in an interleaved manner.

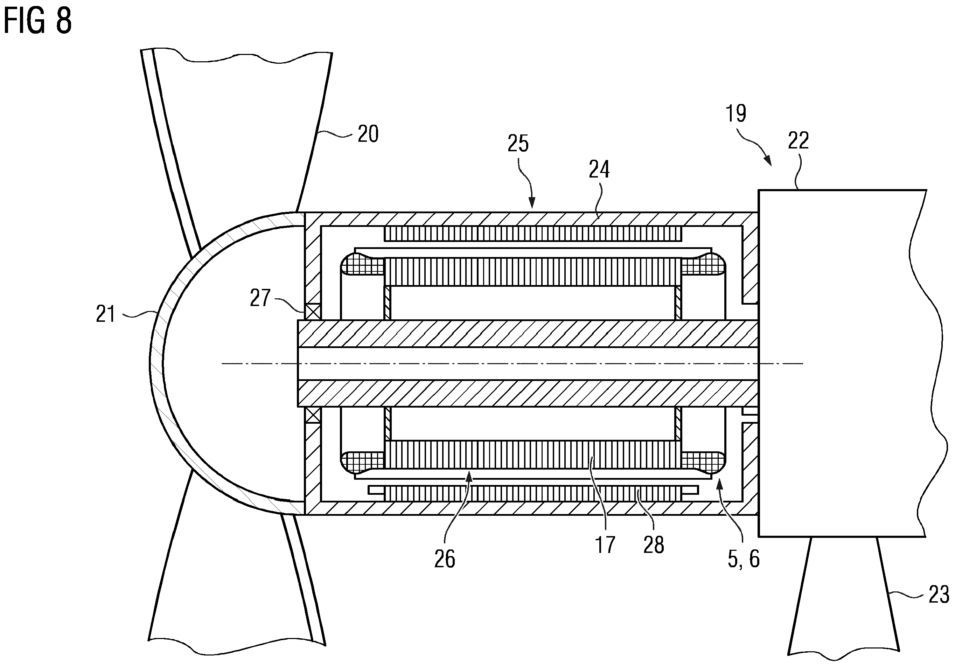

Fig. 8 shows a partial view of a wind turbine 19 according to the invention. The wind turbine 19 comprises blades 20 mounted to a rotor hub 21 located at a nacelle 22, which is supported on a tower 23. The wind turbine 19 is a direct drive wind turbine, wherein an outer rotor 24 of a wind turbine generator 25 according to the invention is directly mounted to the hub 21. The rotor 24 is rotatably mounted around a stator 26 of the generator 25 by a bearing 27. The rotor 24 comprises at least one permanent magnet 28. For simplicity, the stator windings 17 of the respective segments of the stator 26 are only schematically indicated. That is, for each stator segment of the stator 26, a stator winding as shown in fig. 6 is provided.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Stator winding arrangement (1) for a wind turbine generator (25), comprising at least one electrical conductor (3) forming turns of at least one coil and an interturn insulation (7) extending around the conductor (3), the coil running in a geometrical shape having at least one bend (6, 14), **characterized in that** the smallest bending radius of each bend (6, 14) is in the range from 25 to 35 mm and the interturn insulation (7) at least at the at least one bend (6, 14) comprises at least one layer (11, 12, 13) of a mica insulation tape (8) wrapped around the conductor (3).

2. Stator winding arrangement according to claim 1, **characterized in that** the mica insulation tape (8) comprises a mica sublayer (9) backed by a thinner PET sublayer (10) at one side.

3. Stator winding arrangement according to claim 2, **characterized in that** the interturn insulation (7) comprises an inner pure PET tape (29) and multiple, in particular two to four, layers (11, 12, 13) of the mica insulation tape (8), wherein the different layers (11, 12, 13) are stacked such that each mica sublayer (9) is positioned between PET material.

4. Stator winding arrangement according to one of the preceding claims, **characterized in that** the interturn insulation (7) comprises multiple, in particular two to four, layers (11, 12, 13) of the mica insulation tape (8), wherein, along the conductor (3), the boundaries between different adjacent sections of mica insulation tape (8) in the layers (11, 12, 13) are staggered.

5. Stator winding arrangement according to one of the preceding claims, **characterized in that** the mica insulation tape (8) has a thickness of 0.1 to 0.5 mm.

6. Stator winding arrangement according to one of the preceding claims, **characterized in that** the geometrical shape is a longitudinal shape comprising two longitudinal straight sections (4), wherein at least one first of the at least one bend (6) connects the straight sections (4) at at least one longitudinal end (5).

7. Stator winding arrangement according to claim 6, **characterized in that** the geometrical shape is at least essentially a racetrack shape and/or at least one first bend (6) comprises a bending angle of the conductor (3) of at least essentially 180°.

8. Stator winding arrangement according to claim 6 or 7, **characterized in that** second bends (14) of the more than one bend (6, 14) bend the longitudinal ends (5) out a plane (15) in which the straight sections (4) extend, in particular in a predetermined bending angle.

9. Stator winding arrangement according to one of the preceding claims, **characterized in that** the conductor (3) comprises copper and/or is a strand and/or has an at least essentially rectangular or circular cross-sectional shape.

10. Wind turbine generator (25), comprising a stator (26) and a rotor (24), the stator (26) having multiple stator winding arrangements (1) according to one of the preceding claims.

11. Wind turbine generator according to claim 10, **characterized in that** coils of the stator winding arrangements (1) each comprise straight sections (4) running parallelly in recesses of the stator (26) and first bends (6) in a coil overhang region (18).

12. Wind turbine generator according to claim 11, **characterized in that** multiple stator winding arrangements (1) at one of multiple tooth structures are provided for different phases, whose straight sections (4) run parallelly, wherein at least one of the stator winding arrangements (1) of each tooth structure is bent, forming a second bend (14), at a bending angle out of the plane (15), in which the straight sections (4) run, in the coil overhang region (18) to pass a stator winding arrangement (1) of another phase.

13. Wind turbine (19), comprising a wind turbine generator (25) according to any of the claims 10 to 12.

14. Method for manufacturing a stator winding arrangement (1) for a wind turbine generator (25), comprising the steps of
- providing an electrical conductor (3),
- wrapping at least one layer (11, 12, 13) of a mica insulation tape (8) around the conductor (3) as an interturn insulation (7), and
- bending the conductor (3) into a coil having multiple turns and a geometrical shape with at least one bend (6, 14), wherein the smallest bending radius of each bend (6, 14) is in the range from 25 to 35 mm.
